# EUROPEAN PATENT APPLICATION

(11) **EP 3 494 779 A1**
(43) Date of publication of application: **12.06.2019**
(21) Application number: 18209421.9
(22) Date of filing: 30.11.2018
(51) Int. Cl.: A01K 5/02

(54) **CATTLE FEEDING SYSTEM**

(30) Priority: 06.12.2017 NL 2020025
(71) Applicant: Lely Patent N.V., 3147 PB Maassluis (NL)
(72) Inventor: VAN DEN BERG, Karel, 3147 PB Maassluis (NL); NOORDAM, Jacob, 3147 PB Maassluis (NL); BLOKLAND, Korstiaan Cornelis, 3147 PB Maassluis (NL); LI, Yan, 3147 PB Maassluis (NL)
(74) Representative: Octrooibureau Van der Lely N.V.

(57) **Abstract**

A livestock feeding system for determining a roughage intake of individual livestock animals in an animal shed environment comprises a feeding alley for dispensing roughage for the animals thereon, a feeding fence which gives the animals in the animal shed environment access to the roughage in the feeding alley, an animal recognition system configured to repeatedly recognise individual animals as a function of the time and the location along the feeding fence, a feed-measuring device for repeatedly determining a feed amount indication along the feeding fence, and a control unit for the livestock feeding system which is operatively connected to the animal recognition system and to the feed-measuring device. This control unit is configured to determine an individual roughage intake of at least one of the animals on the basis of the repeatedly determined feed amount indications and the animals which have been repeatedly recognised as a function of the location along the feeding fence and of the time. In this way, it is now possible to determine a feeding time and a consumed amount per animal, which provides more information about the feeding behaviour and thus about the animal's health and feed conversion and the like.

## Description

The present invention relates to a livestock feeding system for feeding livestock animals, comprising a feeding alley for dispensing roughage for the animals thereon, a feeding fence which gives the animals in the animal shed environment access to the roughage in the feeding alley, a feed-measuring device for repeatedly determining a feed amount indication along the feeding fence, and a control unit for the livestock feeding system which is operatively connected to the feed-measuring device.

Such systems are known per se. Thus, the Lely Vector® system for use with a feeding fence comprises a feed pusher (Lely Juno®) with a measuring system for determining the amount of feed at the location of the pushed-back feed. In this way, the control unit is able to infer how much roughage is situated at the feeding fence, and whether new feed has to be provided.

A drawback of this system is the fact that it can only assess the feeding behaviour of the animals as a group. In many cases, however, it is desirable to also obtain information regarding individual feeding behaviour, at least on roughage at the feeding fence.

It is therefore an object of the present invention to improve the dairy animal-feeding system mentioned in the preamble in such a manner that it can provide information about individual feeding behaviour of livestock animals with regard to roughage.

This object of the invention is achieved by a livestock feeding system according to Claim 1, in particular a livestock feeding system for determining a roughage intake of individual livestock animals in an animal shed environment, comprising a feeding alley for dispensing roughage for the animals thereon, a feeding fence which gives the animals in the animal shed environment access to the roughage in the feeding alley, an animal recognition system configured to repeatedly recognise individual animals as a function of the time and the location along the feeding fence, a feed-measuring device for repeatedly determining a feed amount indication along the feeding fence, and a control unit for the livestock feeding system which is operatively connected to the animal recognition system and the feed-measuring device and is configured to determine an individual roughage intake of at least one of the animals on the basis of the repeatedly determined feed amount indications and the animals which have been repeatedly recognised as a function of the location along the feeding fence and of the time.

By means of the livestock feeding system according to the invention, it is possible to obtain an accurate impression of the amount of feed consumed by individual animals. By means of the animal recognition system, the system is able to recognise individual animals at the feeding fence. Due to the fact that the system repeatedly recognises individual animals, it (or at least the control unit connected thereto) is able to determine how long the respective animal (or the respective animals) have been standing at the feeding fence or determine the individual feeding time. Furthermore, the feed-measuring device is able to determine a feed amount indication, at least at the location of the identified animal, so that the device, or at least the control unit connected thereto, is also able to determine a consumed amount, by determining the change in the feed amount indication during the time which the identified animal spent at the feeding fence. It goes without saying that the control unit is configured accordingly. The control unit is thus configured to determine the reduction in the feed amount (indication) and to determine which animal is responsible for the latter.

It should be noted here that whenever the term "feed" is used in the present description, this is always understood to mean "roughage", that is to say hay, silage, maize and the like. Concentrated feed, such as pellets and the like, is explicitly excluded. Concentrated feed has been dispensed and measured for a considerable amount of time, but roughage is also a significant feed component in the case of ruminants, such as livestock. Information regarding the roughage intake is very important in order to determine the health of a cow, feed conversion, etc.

The animal recognition system which is configured to recognise individual animals may be configured to recognise one or more predetermined animals from the group of livestock animals. In other words, it may already suffice if the animal recognition device recognises only some of the animals. Advantageously, these are then one or more predetermined animals, for example animals about which the farmer wants to have more information. Consequently, the requirements on the animal recognition device may be less stringent. Obviously, it may also be advantageous if the animal recognition device is configured to recognise more animals, such as all animals of the group of livestock animals.

The procedure by which animals are recognised may be configured in many ways. Thus, it is possible for the animal recognition device to comprise one or more RFID chips or "tags" which are worn by the animals, as well as one or more tag readers. These tag readers are then fitted, for example, on or near the feeding fence, so that the animal recognition device can read the tag(s) worn by the animals.

In embodiments, the animal recognition device comprises at least one camera for repeatedly recording an image of at least a part of the feeding alley, and image-recognition software for recognising one or more animals in the recorded images. In such an animal recognition device, use is made of image recognition in order to recognise animals. In this case, consideration may be given, for example, to recognition of a spotting pattern, or the shape of a snout, head, etc., or other such body characteristics. In addition, the animal recognition device is furthermore advantageously configured to determine a position of the head of the recognised animal. In this way, it is possible to determine with more certainty the individual feeding time as the time during which the recognised animal was standing at the feeding fence with its head pointing downwards. Incidentally, it would also be possible to configure an animal recognition device with tag reader(s) in such a way, for example by placing the tag reader(s) in a low position, so that the animal can no longer be recognised when its head is in an upright position due to the distance between the tag and the tag reader being too great.

The animal recognition device may comprise a single camera, in which case the image preferably comprises the entire feeding fence, so that the one camera will register all eating animals. Advantageously, the animal recognition device comprises several cameras, in which case the image recognition software is configured to recognise one or more of the animals present at the feeding fence from the plurality of camera images, and in particular the eating animals. Again, the device is furthermore configured to determine the feeding time for each eating and/or recognised animal. Advantages of the device comprising several cameras are, inter alia, that there is a reduced risk of the animals covering each other up, and that the resolution in the camera image may be improved by a smaller required distance and/or image angle, thus making improved recognition of animals possible.

In an advantageous embodiment, the feed-measuring device or the animal recognition system comprises at least one camera for repeatedly recording an image of at least a part of the feeding alley, and image recognition software for determining a shape variable, such as the height of one or more animals, in the recorded images. From the course of such a shape variable over time, it is easily possible to determine the growth of an individual animal or the average growth of a group of animals. Preferably, the camera comprises a 3D camera.

In embodiments, the livestock feeding system furthermore comprises an autonomous vehicle which is configured to be moved, in particular driven, along the feeding fence, wherein the autonomous vehicle comprises said camera. This offers the advantage that the entire feeding fence can be recorded using a single camera of sufficient resolution and without, or with only a slight risk of the animals covering each other. Although it is more difficult to obtain a continuous impression of the presence or absence of animals at the feeding fence in this way, the impression of the feeding behaviour which is obtained if the vehicle moves past more often is better. In practice, it is not difficult to determine a desired frequency for the vehicle to drive past. The vehicle may comprise a trolley on wheels, caterpillar tracks or the like. Alternatively, the livestock feeding system, in particular the animal recognition device, comprises a pod or other device which is configured to move autonomously along a rail or other guide means. It is also possible to provide the autonomous vehicle in the form of an autonomous aeroplane, such as in particular a drone. These offer the advantage that they can make images of the feeding fence in a safe yet very quick manner, and are able, as it were, to provide a quasi continuous impression of that feeding fence.

For example, the autonomous vehicle is configured to make images of the feeding fence and the animals situated there once per predetermined time period. The predetermined time period is for example between 1 minute and half an hour. It is not necessary to determine the exact starting and finishing times of a meal for an animal by means of the images. It may already suffice to make an estimate of the minimum and maximum time spent eating, in which case it is possible to obtain in each case a better impression of the feeding behaviour of the animal by repeated measurements and statistical analysis.

In embodiments, said autonomous vehicle is configured to push feed in the feeding alley back towards the feeding fence. This offers the advantage that the vehicle can not only help to recognise the animals, but also fulfils the additional function of pushing feed towards the feeding fence, so that feed which has been thrown away by the animals becomes reachable again. In addition, it is a significant advantage that the animals are tempted to come to the feeding fence by the fact that the feed is pushed towards it, so that there is a much greater chance of observing and recognising animals at the feeding fence. Nevertheless, it is obviously possible to provide a vehicle which has been configured especially for recognition pruposes, for example the abovementioned drone, as an autonomous vehicle.

In embodiments, the feed-measuring device is provided on said autonomous vehicle. This again offers advantages of combining different functions in one vehicle, such as recognising animals and determining a feed amount indication. Nevertheless, the feed-measuring device may also be provided on a separate vehicle. The feed-measuring device is configured to determine a feed amount indicator, and this may be an absolute amount, expressed as a volume or mass, but it may also be a relative amount, such as a percentage of the original amount. In particular, the feed-measuring device comprises a feed-height meter, by means of which a reduction in the thickness of the feed layer can be determined. This already forms a feed amount indication. Advantageously, the vehicle is configured to push feed towards the feeding fence. Practical research has shown that, due to being pushed back, the pushed-back feed always assumes approximately the same shape. Therefore, it is in particular with a vehicle which pushes back feed towards the feeding fence that it is sufficient to determine the height of the pushed-back feed. Reference is made here in particular to a feed pushing vehicle according to the Netherlands patent publication NL-2008185, which describes such a system comprising pushing back feed and measuring its height. Thus, the vehicle may comprise a laser height meter to determine the feed height. Alternatively, the vehicle may also comprise a camera system with image recognition software which is configured to determine a feed height or even directly determine a feed amount from the recorded images. In this case, the camera system comprises in particular a 3D camera.

Advantageously, an autonomous vehicle is thus provided in the livestock feeding system which both pushes feed towards the feeding fence and recognises one or more animals at the feeding fence as well as determining a feed amount indication.

In embodiments, the livestock feeding system comprises an automatic feeding system which is configured to automatically formulate and dispense the roughage, as well as an autonomous feeding device, and in particular an autonomous vehicle, which is configured to dispense roughage on the feeding alley. In this case, the automatic feeding system is operatively connected to the control unit. The livestock feeding system according to these embodiments is then not only able to determine which animal has spent which amount of time standing and/or eating at the feeding fence and how much the animal will have consumed, but will also be able to determine from the information of the automatic feeding system what the respective animal will have consumed. In this way, information can be collected for one or more animals about the feeding time (as well as feeding fence time spent at the feeding fence), amount of feed consumed and ingested feed composition. In this way, it is possible to obtain a satisfactory representation of the feeding behaviour of the one or more animals.

In particular, the functions of recognising animals, pushing back feed and dispensing roughage are at least partly combined in one or more autonomous vehicles. For example, the function of pushing back feed and dispensing (new) roughage are combined in one vehicle. Obviously, this is not obligatory and it may also be advantageous to provide several vehicles which can then take pictures more often. An example thereof is a feed pusher, such as the Lely Juno®, combined with a vehicle for providing roughage, such as the MFR (Mixing and Feeding Robot) of the Lely Vector®-system, and a drone for additional measurements to recognise the animals and determine the feeding time. Other combinations are obviously possible.

In all embodiments of the livestock feeding system according to the invention, the control unit may be configured to autonomously process the collected information to produce one or more subsequent actions. For example, the control unit may generate an alarm if the respective animal eats for a period of time which is too short or too long, and/or eats too much or too little, and/or eats feed having an undesirable composition.

The invention will be explained in more detail below by means of one or more exemplary embodiments and the drawing, in which:
Fig. 1 shows a diagrammatic top view of an animal shed environment comprising a livestock feeding system according to the invention, and
Fig. 2 shows a diagrammatic side view of a part of a livestock feeding system according to the invention.

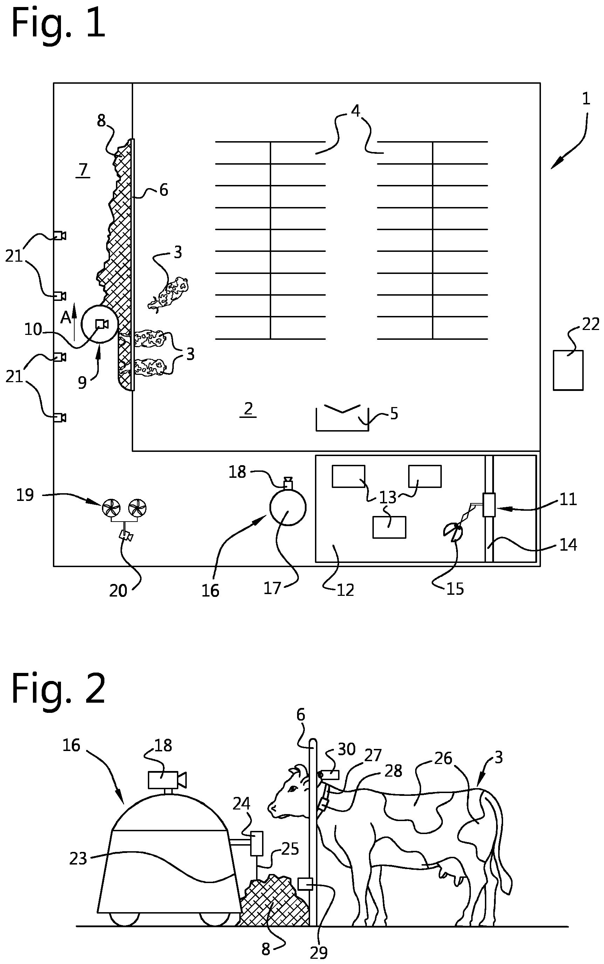

Fig. 1 shows a diagrammatic top view of an animal shed environment 1 comprising a livestock feeding system according to the invention. The animal shed environment 1 comprises an area 2 in which livestock animals 3 are free to roam, and cubicles 4, and a milking robot 5. Reference numeral 6 denotes a feeding fence, behind which roughage 8 is situated in a feeding alley 7 which is being pushed back by a feed pusher 9 comprising a camera device 10.

An automatic feeding system is denoted by reference numeral 11 and comprises a feed-positioning area or feed kitchen 12 comprising feed varieties 13 which are deposited on a feed wagon 16 comprising a mixing bowl 17 and a camera device 18 by means of a crane 14 comprising a grab 15.

Reference numeral 19 denotes a drone comprising a camera device 20. A fixedly arranged camera system comprises cameras 21. Finally, a control unit is denoted by reference numeral 22.

The illustrated animal shed environment 1 here is intended for dairy cows 3 and for this reason also comprises, in addition to the usual cubicles 4, a milking robot 5, none of which are relevant for the invention. The invention is incidentally also suitable for livestock animals other than dairy cows, such as sheep and goats, and also for meat animals. However, for the sake of convenience, in the following, the animals will be assumed to be dairy cows.

The animal shed environment 1 also comprises a feeding fence 6, where the cows 3 can eat roughage 8 which has been provided in a feeding alley 7. The roughage comprises, for example, grass, hay, silage, fodder crops and other, often low-calorie and texture-rich feed which forms a significant part of ruminants' diet. This roughage may also be supplemented by minerals, concentrated feed, etc.

When eating the roughage 8, the animals will throw some of this away from the feeding fence 6, after which it will have to be pushed back again periodically towards the feeding fence. This is often still carried out by hand, but may also be performed automatically, such as by means of the optional feed pusher 9, for example a Lely Juno®. Here, this is also provided with a camera device 10 and, optionally, with a feed-height meter (not shown here).

The camera device 10 comprises image recognition software to recognise (the identity of) the cows 3, for example on the basis of a spotting pattern on the animals, morphological features or identifying marks which have been applied. The control unit 22 which is operatively connected to the camera device 10 can then monitor where and when each identified cow is situated at the feeding fence 6. Furthermore, the camera device 10, at least the image recognition software thereof, may be configured to determine a feed amount, in particular how much feed 8 is situated at which location on the feeding fence 6. Additionally or alternatively, use may be made in this case of a feed-height meter, as will be explained in more detail with reference to Fig. 2.

On the basis of the determined identity, the control unit 22 can then estimate or determine how much feed an identified animal has eaten by subtracting the amount of feed at the location of that animal after it has eaten from the amount of feed before that animal had eaten.

The height and/or consumed amount and/or the feeding time may additionally or alternatively be determined by means of the camera system, which comprises several cameras 21 which together form an image of the feeding fence 6 and the animals situated there which is in principle complete. The associated distance and image angle can easily be selected by the person skilled in the art. This camera system offers the advantage that it is able to produce a complete image of all eating animals at any time, and is therefore able to determine the feeding time per animal very accurately. Obviously, it is possible to use the same image recognition software in the camera system as in the camera 10.

The height and/or consumed amount and/or the feeding time may additionally or alternatively be determined by means of the camera device 18 on the feed wagon 16. This feed wagon 16, whose feed bowl 17 can be filled in, for example, a feed kitchen 11, drives along the feeding fence 6 in order to dispense feed 8 there. The camera device 18 can then also recognise the animals 3 which are situated there and eat there. The camera device 18 comprises a 3D camera. Obviously, the camera system may use the same image recognition software as the camera 10.

Every time the vehicle 16 drives along the feeding fence 6, the camera device 18 on the vehicle 16 takes an image of at least a part of the feeding alley 7. From the recorded images, the image recognition software determines a shape variable, such as the height of one or more animals 3. By also recognising the respective animal which is situated at the feeding fence 6, the shape variable is coupled to the identity of the animal 3 and stored in the software memory, together with the time the measurement was carried out. This makes it possible to determine the progress of growth over time of the animal 3 in a known manner.

If the recognition device is absent, an average of the animals 3 from a group can be determined by repeatedly averaging the measured shape variables of the anonymous animals 3.

In this example, the feed wagon 16 is filled in the automatic feeding system 11. There, a number of feed varieties 13 are arranged, such as hay, fodder crops, etc., in a feed-positioning area or "feed kitchen" 12. A crane 14 with a grab 15 may in each case take a grab of feed from a feed variety and pour it into the mixing bowl 17 of the feed wagon 16. The feed is then mixed and dispensed at the feeding fence after it has been driven there.

In this case, the control unit 22 serves as the producer of the recipe of the ration and as the operator of the crane and grab. In addition, the control unit 22 in this case knows the composition of the feed 8. In combination with the knowledge of the feeding time per animal 3, the control unit 22 then also knows how much of a specific dispensed feed 8 an individual animal 3 has eaten, so that even more knowledge about the feeding behaviour, feed conversion, etc. per animal can be provided. Obviously, this is advantageous for managing the herd and the individual animals. It should be clearly stated here that this knowledge of the feed is optional, as are the feeding system 11 and the embodiment thereof.

Finally, a drone 19 is shown which is provided with a camera device 20. The height and/or amount of the feed 8 and/or the feeding time per animal 3 may, additionally or alternatively, also be determined by means of this camera device. An advantage of such a drone 19 is that it can often perform a measurement of the height and/or amount of feed, is able to produce an overview often and quickly of which animal is eating at which location. Furthermore, it is easy for the drone 19 to find a predetermined animal and to then hover near that animal for as long as that animal is eating at the feeding fence 6.

Incidentally, the image recognition software of the camera devices 20 and/or 18 and/or 10 and/or 21 may not only be configured to recognise animals 3 and/or the height or amount of the feed 8, but also to recognise the animals 3 and their position, in particular whether the animal is eating feed or not. For example, if an animal's head is pointing downwards, this is a clear indication of eating. By means of such an enhancement, determining the actual feeding time becomes even more accurate. Nevertheless, this is optional, since it is also possible to provide an estimate of the feeding time from the total time the animal or the animals have been present without this enhancement, if desired corrected by an optionally animal-dependent factor, which factor may be determined empirically or from the literature.

Fig. 2 shows a diagrammatic side view of a part of a livestock feeding system according to the invention. It comprises a feed pusher 16' with a camera device 18, a rotatable element 23 and a height meter 24 with a laser beam 25. Furthermore, a cow 3 has a pattern of spots 26 and is provided with a collar 27 comprising a tag 28 which is readable by tag reader 29. Finally, reference numeral 30 denotes an earmark. In this case, similar components in the entire drawing are denoted by identical reference numerals.

Here, the feed wagon is a feed pusher, such as the Lely Juno®, which pushes the feed 8 towards the feeding fence 6 by means of a rotatable element 23, as is known, inter alia, from WO2013/112042. This publication also discloses that this pushing back of the feed 8 results in a generally similar shape of the pushed-back pile of feed, so that a simple height measurement already provides a good indication of the feed amount. To this end, the feed pusher 16' in the present example comprises a laser height meter 24 which emits a laser beam 25 which is directed at the pushed-back feed pile 8.

The camera device 18 is again configured to recognise the cow 3, for example by means of the unique spotting pattern 26 and/or reading the earmark 30, and/or alternatively/additionally to determine the amount of feed 8. In addition, a tag reader 29 is provided which is able to identify the cow by reading the tag 28 on the collar of the cow 3. By making the tag reader 29 suitably sensitive and suitably positioning it, it is possible to ensure that the tag reader only emits an identification signal if the cow bows its head down, towards the feed 8. In this way, the feeding time can be determined or checked efficiently.

It should be noted here that, in practice, pushing back feed towards the feeding fence 6 results in many cows 3 visiting this feeding fence because they wish to eat fresh feed. This means that the point at which a cow 3 is recognised may be regarded, with a high degree of certainty, as the starting time of a feeding or meal. Determining the duration of this feeding then makes it easy to determine the consumed amount of feed.

The illustrated embodiments only serve to explain the invention and do not constitute any limitation thereof. The scope of protection is defined by means of the attached claims.

## Claims

1. Livestock feeding system for determining a roughage intake of individual livestock animals (3) in an animal shed environment (1), comprising
- a feeding alley (7) for dispensing roughage (8) for the animals (3) thereon,
- a feeding fence (6) which gives the animals (3) in the animal shed environment (1) access to the roughage (8) in the feeding alley (7),
- an animal recognition system configured to repeatedly recognise individual animals (3) as a function of the time and the location along the feeding fence (6),
- a feed-measuring device for repeatedly determining a feed amount indication along the feeding fence (6), and
- a control unit for the livestock feeding system which is operatively connected to the animal recognition system and the feed-measuring device and is configured to determine an individual roughage intake of at least one of the animals (3) on the basis of the repeatedly determined feed amount indications and the animals (3) which have been repeatedly recognised as a function of the location along the feeding fence (6) and of the time.

2. Livestock feeding system according to Claim 1, wherein the animal recognition system comprises at least one camera (18, 20, 21) for repeatedly recording an image of at least a part of the feeding alley (7), and image recognition software for recognising one or more animals (3) in the recorded images.

3. Livestock feeding system according to Claim 1 or 2, wherein the feed-measuring device or the animal recognition system comprises at least one camera (18, 20, 21) for repeatedly recording an image of at least a part of the feeding alley (7), and image recognition software for determining a shape variable, such as the height of one or more animals (3), in the recorded images.

4. Livestock feeding system according to Claim 2 or 3, wherein the camera (18, 20, 21) comprises a 3D camera.

5. Livestock feeding system according to one of the preceding claims, furthermore comprising an autonomous vehicle (9, 16) which is configured to drive along the feeding fence (6), wherein the autonomous vehicle (9, 16) comprises said camera (10).

6. Livestock feeding system according to Claim 5, wherein said autonomous vehicle (9, 16) is configured to push feed (8) in the feeding alley (7) back towards the feeding fence (6).

7. Livestock feeding system according to Claim 5 or 6, wherein the feed-measuring device is provided on said autonomous vehicle (9, 16) and in particular comprises a feed-height meter (24).

8. Livestock feeding system according to one of the preceding claims, comprising an automatic feeding system (11) which is configured to automatically formulate and dispense the roughage (8), as well as an autonomous feeding device, and in particular an autonomous vehicle (16), which is configured to dispense roughage (8) on the feeding alley (7).
